(19) Europäisches Patentamt
European Patent Office
Office européen des brevets

(11) **EP 1 865 461 A2**

(12) **EUROPÄISCHE PATENTANMELDUNG**

(43) Veröffentlichungstag:
**12.12.2007 Patentblatt 2007/50**

(51) Int Cl.:
*G06T 5/00* (2006.01)   *G06T 5/40* (2006.01)

(21) Anmeldenummer: **07008721.8**

(22) Anmeldetag: **28.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **09.06.2006 DE 102006026843**

(71) Anmelder: **Carl Zeiss NTS GmbH**
**73447 Oberkochen (DE)**

(72) Erfinder:
• **Albiez, Michael**
**73431 Aalen (DE)**
• **Hayn, Armin**
**Saffron Walden**
**Essex CB11 3AG (GB)**
• **Evans, Owain**
**CB3 9BL Cambridge (GB)**

(74) Vertreter: **Henckell, Carsten**
**c/o Carl Zeiss AG**
**Carl-Zeiss-Strasse 22**
**73447 Oberkochen (DE)**

(54) **Verfahren zur Bearbeitung eines digitalen Grauwertbildes**

(57) Die Erfindung betrifft ein Verfahren zur Bearbeitung eines digitalen Grauwertbildes, welches die Schritte aufweist:
d) von dem Grauwertbild ein binäres Kantenbild so erzeugen, dass im Grauwertbild vorhandene Kanten als Kantenzugbereiche ermittelt werden;
e) im Grauwertbild innerhalb von Bereichen, welche den Kantenzugbereichen entsprechen, einen Scharfzeichnungsalgorithmus anwenden; und
f) im Grauwertbild innerhalb von Bereichen, welche außerhalb der Kantenzugbereiche liegen, ein Glättungsverfahren durchführen,
so dass ein zusätzliches, geglättetes und geschärftes Grauwertbild erzeugt wird.

Fig. 3

EP 1 865 461 A2

**Beschreibung**

Die Erfindung betrifft ein Verfahren zur Bearbeitung eines digitalen Grauwertbildes. Die Erfindung betrifft ferner ein Computersystem und ein Computerprogramm zur Durchführung eines solchen Verfahrens sowie eine Bildaufnahmevorrichtung mit einem derartigen Computerprogramm.

Ein digital aufgenommenes Grauwertbild enthält Bildinformationen, die in unterschiedlichen Grauwerten dargestellt sind. Wird ein solches Bild zum Beispiel mittels eines Elektronenmikroskops erstellt, rastert ein Elektronenstrahl zeilenweise über den zu untersuchenden Probenbereich. Wird dies mit hoher Geschwindigkeit vorgenommen, entsteht ein Rauschen bzw. eine "Körnung", das die eigentliche Bildinformation deutlich und störend überlagert. Ein solcherart aufgenommenes Bild kann ein Betrachter nur erschwert und mit relativ großer Unsicherheit erfassen. Wird ein Elektronenstrahl mit sehr langsamer Geschwindigkeit über die Probe geführt, lassen sich Bildelemente nur noch unscharf abbilden, da sich wegen einer langen Integrationszeit je Bildpunkt mechanische und elektronische Störungen verstärkt auswirken. Derartige Aufnahmen können mit einer digitalen Bildnachbearbeitung zum Beispiel durch einen Rauschfilter so verbessert werden, dass das Verhältnis aus Signal zu Rauschen erhöht wird. Dabei werden häufig Grauwerte benachbarter Pixel summiert und gemittelt. Während das Rauschen dabei vermindert wird, verschlechtert sich die Auflösung des Bildes. Dieser Zusammenhang lässt sich beim Einsatz eines Rauschfilters prinzipiell nicht vermeiden.

Es ist daher eine Aufgabe der Erfindung, ein Verfahren anzugeben, mit dem ein digitales Grauwertbild so bearbeitet werden kann, dass ein verringertes Bildrauschen und gleichzeitig eine höhere Bildschärfe erreicht wird.

Diese Aufgabe wird durch ein Verfahren mit den Merkmalen des Anspruchs 1, durch Computerprogramme mit den Merkmalen der Ansprüche 11 und 12, durch ein Computersystem mit den Merkmalen des Anspruchs 13 und durch eine Bildaufnahmevorrichtung mit den Merkmalen des Anspruchs 14 gelöst.

Bei dem erfindungsgemäßen Verfahren gemäß Anspruch 1 wird von einem aufgenommenen Grauwertbild ein binäres Kantenbild so erzeugt, dass im Grauwertbild vorhandene Kanten als Kantenzugbereiche ermittelt werden. Anschließend wird im Grauwertbild innerhalb von Bereichen, welche den Kantenzugbereichen entsprechen, ein Scharfzeichnungsalgorithmus angewendet. Innerhalb von Bereichen, welche im Grauwertbild außerhalb der Kantenzugbereiche liegen, wird ein Glättungsverfahren durchgeführt, so dass insgesamt ein zusätzliches, geglättetes und geschärftes Grauwertbild erzeugt wird. Ein Rauschunterdrückungsfilter, mit dem das gesamte Bild bearbeitet wird, kommt somit nicht zum Einsatz. Vielmehr wird nur eine Rauschunterdrückung in Bereichen vorgenommen, die nicht als Kante identifiziert worden waren. Damit erfolgt eine Rauschunterdrückung nur in den Bereichen, die einen kleinen Gradienten im Grauwert zwischen einander benachbarten Bildpunkten aufweisen. Liegt in einem Bereich ein hoher Grauwert-Gradient vor, welcher auf das Vorhandensein einer Kante schließen lässt, wird ein Scharfzeichnungsalgorithmus angewendet, so dass in diesem Bereich eine höhere Schärfe erreicht wird. Durch das erfindungsgemäße Verfahren erfolgt somit eine selektive Filterung. Das prinzipielle Problem, beim Einsatz eines Rauschunterdrückungsfilters für das gesamte Bild zwar das Rauschen zu verringern, die Auflösung des Bildes jedoch zu verschlechtern, kann durch das erfindungsgemäße Verfahren geschickt umgangen werden.

Gemäß einer bevorzugten Ausführungsform werden mit dem Scharfzeichnungsalgorithmus Grauwerte innerhalb der Bereiche, welche den Kantenzugbereichen entsprechen, mittels einer Tangens Hyperbolicus-Funktion berechnet. Eine solche Funktion bietet sich besonders bei Aufnahmen an, die mittels eines Elektronenstrahls erstellt wurden. Ein Elektronenstrahl, der über eine scharfe Objektkante geführt wird, erzeugt in dem aufzubauenden Bild einen Kantenverlauf, der sich sehr gut durch eine Tangens- Hyperbolicus-Funktion beschreiben lässt. Vorzugsweise erfolgt die Berechnung eines solchen aufzubauenden Bildes bzw. der Grauwertmatrix mittels folgender Gleichung:

$$If = A * \tanh ( m * (\text{artanh} [\{I0\text{-}C\}/A] ) ) + C,$$

mit

If =    Grauwertmatrix des geschärften Grauwertbildes mit Grauwerten innerhalb der Kantenzugbereiche;
I0 =    Grauwertmatrix des unbearbeiteten Grauwertbildes;
A =     Amplitude einer Tangens Hyperbolicus-Funktion, welche den Grauwertverlauf im unbearbeiteten Grauwertbild innerhalb der Bereiche, welche den Kantenzugbereichen entsprechen, angibt;
C =     Grauwert am Wendepunkt der Tangens Hyperbolicus-Funktion, welche den Grauwertverlauf im unbearbeiteten Grauwertbild innerhalb der Bereiche, welche den Kantenzugbereichen entsprechen, angibt; und
m =     Schärfungsfaktor.

Gemäß einer Ausführungsform der Erfindung wird das binäre Kantenbild mittels eines auf Basis des Grauwertbildes erzeugten Gradientenbildes geschaffen, wobei für das Erzeugen des Gradientenbildes vorzugsweise ein Differenzenoperator zum Einsatz kommt, welcher aus der Gruppe ausgewählt ist, welche einen Sabel-Operator, Prewitt-Operator, Laplace-Operator, Kirsch-Operator und Roberts-Operator aufweist. Es können auch andere Differenzenoperatoren zum Einsatz kommen, wenn sich damit ein Gradientenbild erzeugen lässt. Vorzugsweise wird das Grauwertbild vor dem Erzeugen des Gradientenbildes einem Glättungsverfahren unterzogen. Dies kann zum Beispiel durch den Einsatz eines Medianfilters geschehen. Ein derartiges Glättungsverfahren dient dazu, die Rauschintensität im ursprünglich aufgenommenen Grauwertbild zu verringern.

Gemäß einer bevorzugten Ausführungsform der Erfindung wird das Gradientenbild durch Verknüpfen eines ersten Richtungs-Gradientenbildes mit einem zweiten Richtungs-Gradientenbild erzeugt, wobei das erste Richtungs-Gradientenbild geschaffen wird, indem Gradienten im Grauwertbild in einer ersten Richtung ermittelt werden, und das zweite Richtungs-Gradientenbild geschaffen wird, indem Gradienten im Grauwertbild in einer zur ersten Richtung senkrechten Richtung ermittelt werden. Eine solche Vorgehensweise bietet sich zum Beispiel beim Einsatz eines Sobel-Operators an. Durch eine derartige Gradientenbestimmung lässt sich die Richtung der Gradienten an zu identifizierenden Kanten erkennen. Dies ist vorteilhaft, da somit Kantenzugbereiche mit geschlossenen Pfaden ermittelt werden können. Sind derartige Pfade ermittelt, kann sofort der Schwellwert für die Binarisierung als Mittelwert von Grauwerten des Grauwertbildes in den Kantenzugbereichen berechnet werden.

Wird nicht nach geschlossenen Pfaden gesucht, so dass sich zum Beispiel auch Halbkreise ermitteln lassen, kann dem Gradientenbild ein erster Schwellwert zugeordnet werden, wobei Gradientenbildpunkte mit einem Helligkeitsbetrag oberhalb des ersten Schwellwertes auf logisch 1 gesetzt und unterhalb des ersten Schwellwertes auf logisch 0 gesetzt werden, so dass ein binäres Kantenbild geschaffen wird, in welchem die auf logisch 1 gesetzten Gradientenbildpunkte Kantenzugbereiche bilden und die auf logisch 0 gesetzten Gradientenbildpunkte einen Hintergrund bilden. Damit wird ein binäres Kantenbild mit Kantenzugbereichen vor schwarzem Hintergrund erstellt. Der erste Schwellwert beträgt vorzugsweise ein Viertel des maximalen Gradienten im Gradientenbild. Ein solcher relativ kleiner Schwellwert ist vorteilhaft, da somit nur relativ wenig Bildinformation aus dem noch als Grauwertbild vorliegenden Gradientenbild ausgeblendet wird.

Falls eine weitere Reduzierung von Rauschsignalen erwünscht ist, kann das binäre Kantenbild einem Glättungsverfahren unterzogen werden, so dass ein geglättetes binäres Kantenbild erzeugt wird. Anschließend wird ein zweiter Schwellwert festgesetzt, wobei Bildpunkte mit einem Helligkeitsbetrag oberhalb des zweiten Schwellwertes auf logisch 1 gesetzt werden, und Bildpunkte mit einem Helligkeitsbetrag unterhalb des zweiten Schwellwertes auf logisch 0 gesetzt werden, wobei die auf logisch 1 gesetzten Kantenbildpunkte Kantenzugbereiche bilden und die auf logisch 0 gesetzten Kantenbildpunkte einen Hintergrund bilden, um ein zusätzliches binäres Kantenbild zu erzeugen. Vorzugsweise beträgt der zweite Schwellwert die Hälfte des maximalen Gradienten in dem geglätteten binären Kantenbild. Da die Basis ein Binärbild ist, kann dieser relativ hohe Schwellwert verwendet werden, ohne wichtige Bildinformation auszublenden.

Vorteile und Weiterbildungen der Erfindung werden an Hand der nachfolgenden Figuren erläutert, in welchen zeigen:

| Fig. 1 | ein aufgenommenes digitales Grauwertbild mit hohem Rauschanteil; |
| Fig. 2A | ein Diagramm mit einem Grauwert-Verlauf entlang einer Objektkante im Grauwertbild vor Einsatz eines Schärfungsalgorithmus; |
| Fig. 2B | ein Diagramm mit einer Tangens-Hyperbolicus-Funktion, welche zum Grauwertverlauf der in Fig. 2A dargestellten Kurve korrespondiert; |
| Fig. 2C | ein Diagramm mit einer Tangens-Hyperbolicus-Funktion, welche zu der in Fig. 2B dargestellten Kurve korrespondiert und eine höhere Steigung besitzt; |
| Fig. 3 | ein Diagramm mit Grauwert-Verläufen entlang einer Objektkante nach Einsatz eines Schärfungsalgorithmus; |
| Fig. 4 | ein auf Basis des Grauwertbildes von Fig. 1 global geglättetes Grauwertbild; |
| Fig. 5 | ein erstes Richtungs-Gradientenbild auf der Basis des geglätteten Grauwertbildes von Fig. 4; |
| Fig. 6 | ein zweites Richtungs-Gradientenbild auf der Basis des geglätteten Grauwertbildes von Fig. 4; |
| Fig. 7 | ein Gradientenbild aus der Verknüpfung des ersten und des zweiten Richtungs-Gradientenbildes gemäß Fig. 5 und Fig. 6; |
| Fig. 8 | ein binäres Kantenbild mit Kantenzugbereichen auf der Basis des Gradientenbildes von Fig. 7; |
| Fig. 9 | ein global geglättetes binäres Kantenbild auf der Basis des binären Kantenbildes von Fig. 8; |
| Fig. 10 | ein zusätzliches binäres Kantenbild mit Kantenzugbereichen auf der Basis des Bildes von Fig. 9; |
| Fig. 11 | eine Überlagerung des ursprünglichen Grauwertbildes gemäß Fig. 1 mit dem zusätzlichen binären Kantenbild gemäß Fig. 10; |
| Fig. 12 | ein geglättetes und geschärftes Kantenbild auf der Basis von Fig. 10 und Fig. 11; |
| Fig. 13A und Fig. 13B | jeweils ein Flussdiagramm mit den wichtigsten Schritten des erfindungsgemäßen Verfahrens; |

Fig. 14    ein Flussdiagramm mit den wichtigsten Schritten eines Schärfungsalgorithmus gemäß der Erfindung; und

Fig. 15    eine schematische Querschnittsansicht eines Elektronenmikroskops mit einem Monitor.

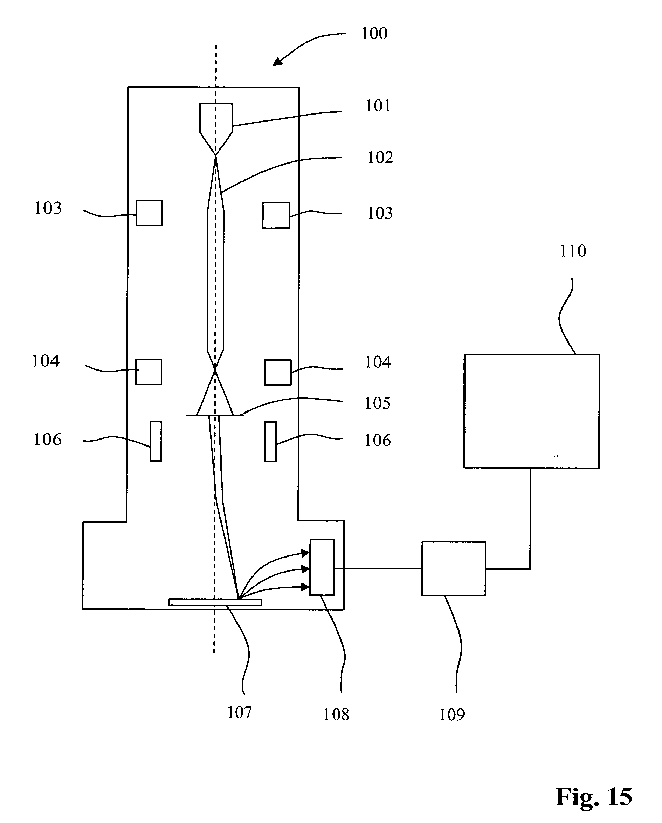

In Fig. 15 ist ein Rasterelektronenmikroskop 100 mit einem Monitor 110 dargestellt, welcher ein Grauwertbild anzeigen kann. Das Rasterelektronenmikroskop 100 weist eine Elektronenquelle 101 auf, welche einen Elektronenstrahl 102 aussendet, der von elektromagnetischen Linsen 103 und 104 gebündelt wird. Nach dem Passieren einer Aperturblende 105 wird der Elektronenstrahl von Ablenkspulen 106 auf eine zu untersuchende Probe 107 gelenkt und zeilenförmig über die Oberfläche der Probe gerastert. Beim Auftreffen des Elektronenstrahls auf die Probe werden unter anderem Sekundärelektronen frei, die von einem Detektor 108 erfasst werden. Dessen Signale werden zu einem nachgeschalteten Verstärker 109 geleitet, an den der Monitor 110 gekoppelt ist, mit welchem sich ein Grauwertbild anzeigen lässt.

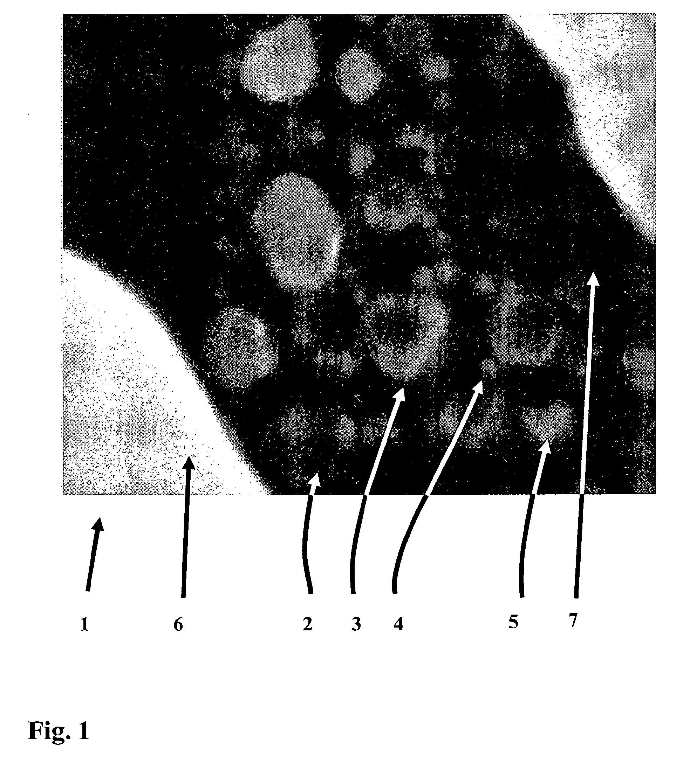

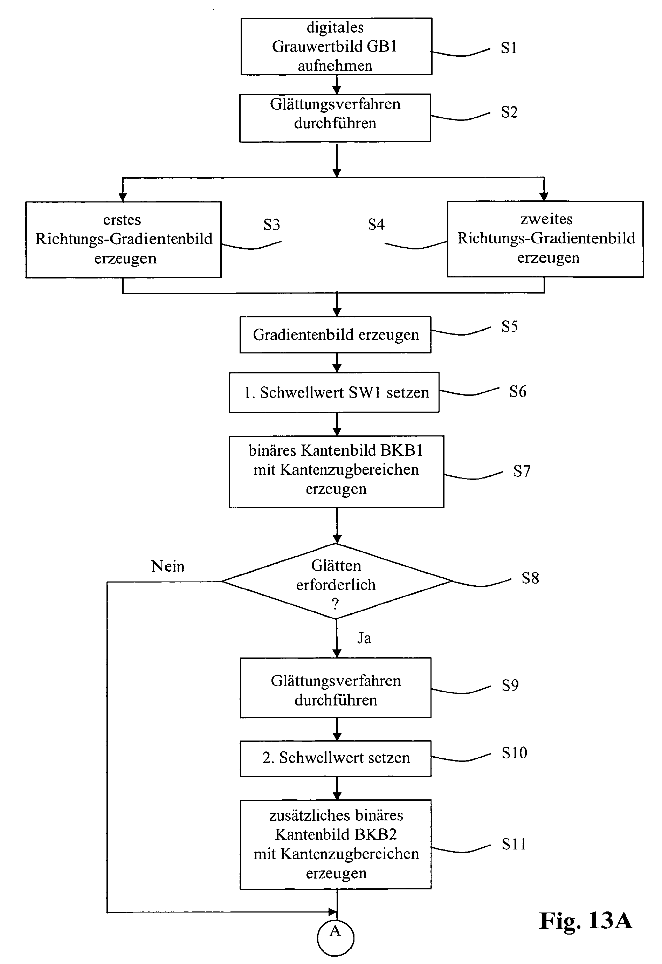

In Fig. 1 ist ein mit einem Rasterelektronenmikroskop aufgenommenes digitales Grauwertbild 1 (Schritt S1, vgl. Flussdiagramm in Fig. 13A) dargestellt. Es weist in unterschiedlichen Grautönen relativ helle kreisförmige und vieleckige Objekte 2, 3, 4 in unterschiedlicher Größe vor einem dunkler erscheinenden Hintergrund 7 auf. Teilweise besitzen die Objekte im Vergleich zu ihrem Zentrum einen helleren Randbereich 5, so dass sie vor dem dunkleren Hintergrund 7 für das menschliche Auge gut erkennbar sind. In der Aufnahme sind ferner im Vergleich zu den Objekten 2, 3 und 4 relativ helle Bereiche 6 erkennbar, die eine große Bildfläche einnehmen.

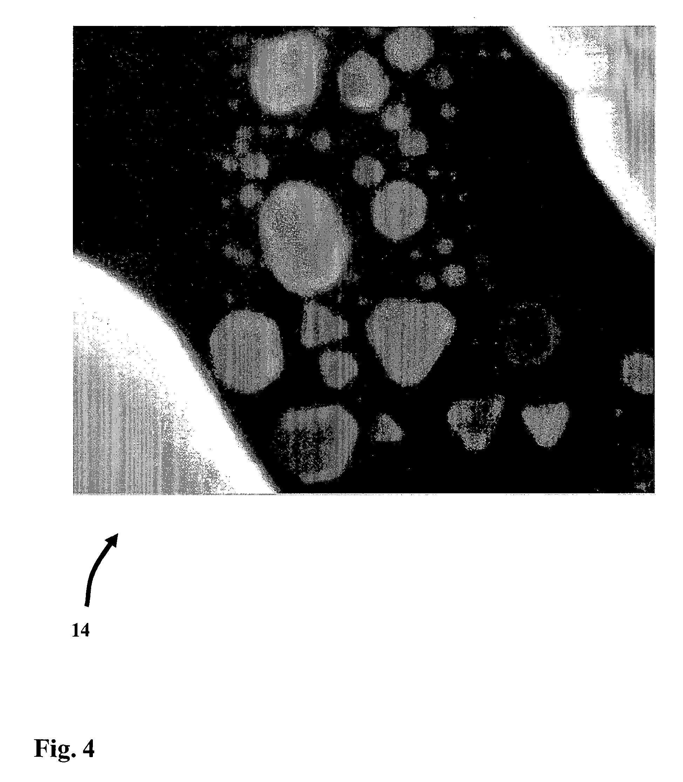

Die Bildverarbeitung erfolgt gemäß der Erfindung derart, dass zunächst ein binäres Kantenbild erzeugt wird, um dort Kantenzugbereiche zu ermitteln. Dazu wird in einem Schritt S2 das in Schritt S1 aufgenommene Grauwertbild auf seiner gesamten Fläche ("global") einem Glättungsverfahren unterzogen, so dass ein geglättetes Grauwertbild 14 vorliegt, siehe Fig. 4. Dies kann zum Beispiel mit einem 3x3-Medianfilter durchgeführt werden. Das geglättete Grauwertbild 14 zeigt im Vergleich zum Grauwertbild 1 verringerte Rauschsignale.

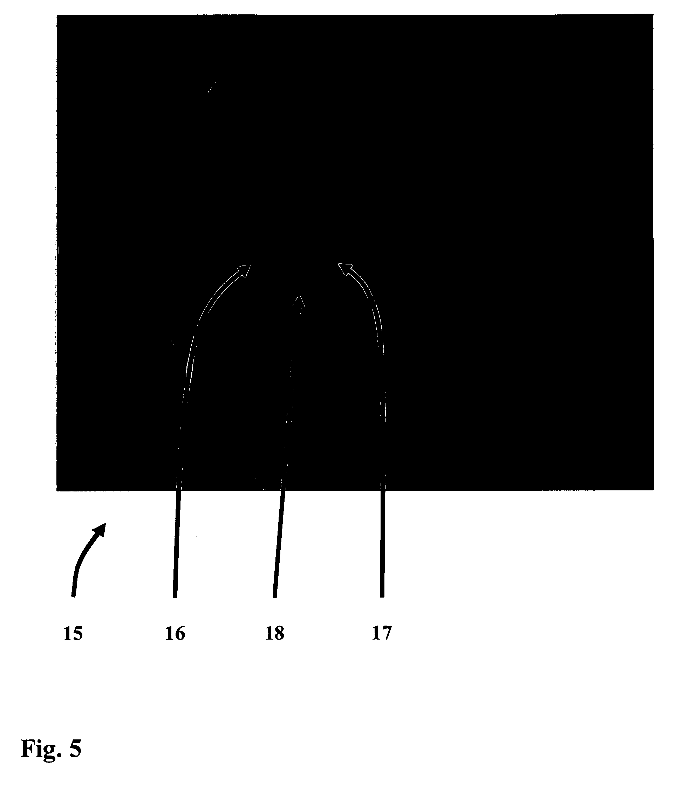

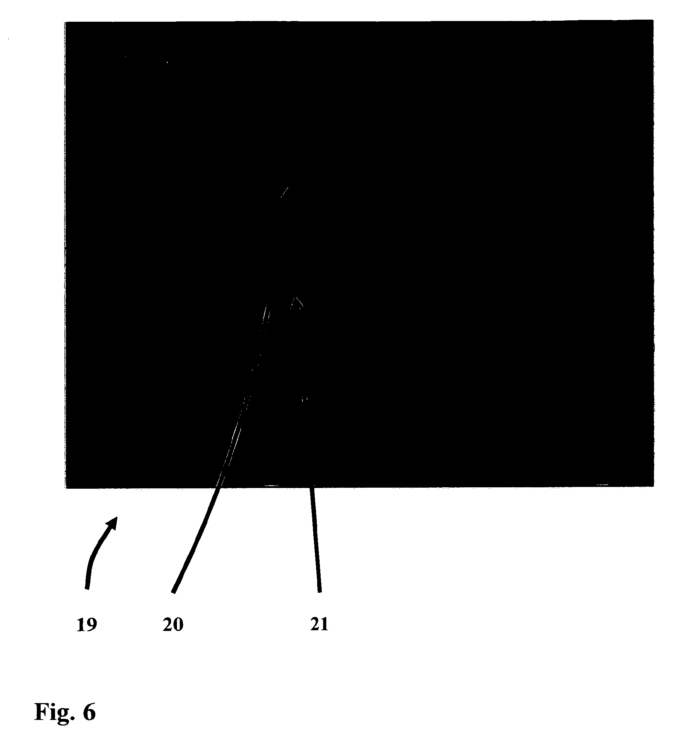

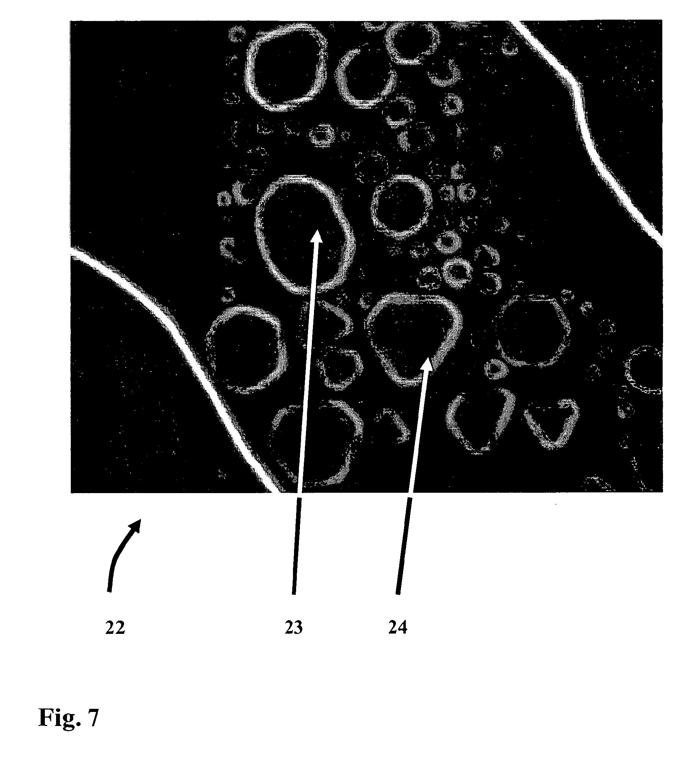

Anschließend kann in einem Schritt S3 ein erstes Richtungs-Gradientenbild erzeugt werden. Bei dem in Fig. 5 dargestellten ersten Richtungs-Gradientenbild 15 wurde basierend auf dem geglätteten Grauwertbild 14 für jede Punktzeile ein Gradient in Zeilenrichtung ermittelt. An Kanten, welche in Zeilenrichtung vorliegen, ergeben sich somit dunklere oder hellere Linien, siehe Bezugszeichen 16 und 17 in Fig. 5. Ist beim Abtasten in Zeilenrichtung (x-Richtung) kein Gradient zu erkennen, erscheint ein durchschnittlicher Grauwert, der sich nicht durch eine hellere oder dunklere Linie von der Umgebung abhebt, siehe Bezugszeichen 18. In einem weiteren Schritt S4 wird auf der Basis des geglätteten Grauwertbildes 14 dieses Vorgehen zum Ermitteln eines Gradienten auch in Spaltenrichtung (y-Richtung) durchgeführt. Fig. 6 zeigt ein zweites Richtungs-Gradientenbild 19, wobei für jede Punktspalte ein Gradient in Spaltenrichtung ermittelt wurde. Aus Fig. 6 ist erkennbar, dass sich in Spaltenrichtung zum Beispiel eine hellere Linie 20 und dunklere Linie 21 am Rande einer Objektkante ergibt. Werden die beiden Richtungs-Gradientenbilder 15 und 19 miteinander verknüpft (Schritt S5), zum Beispiel durch Quadrieren des jeweiligen Grauwertes jedes Bildpunktes des ersten Richtungs-Gradientenbildes 15 und des zweiten Richtungs-Gradientenbildes 19 und anschließendes Addieren der Quadrate für jeden Bildpunkt, ergibt sich das in Fig. 7 dargestellte Gradientenbild 22. Von den vorhandenen Objekten sind nun vorrangig die Umrisse im Bereich ihrer Kanten zu erkennen. Zusätzlich sind innerhalb der Objekte etwas dunklere Bereiche 23, 24 vor noch dunklerem Hintergrund sichtbar.

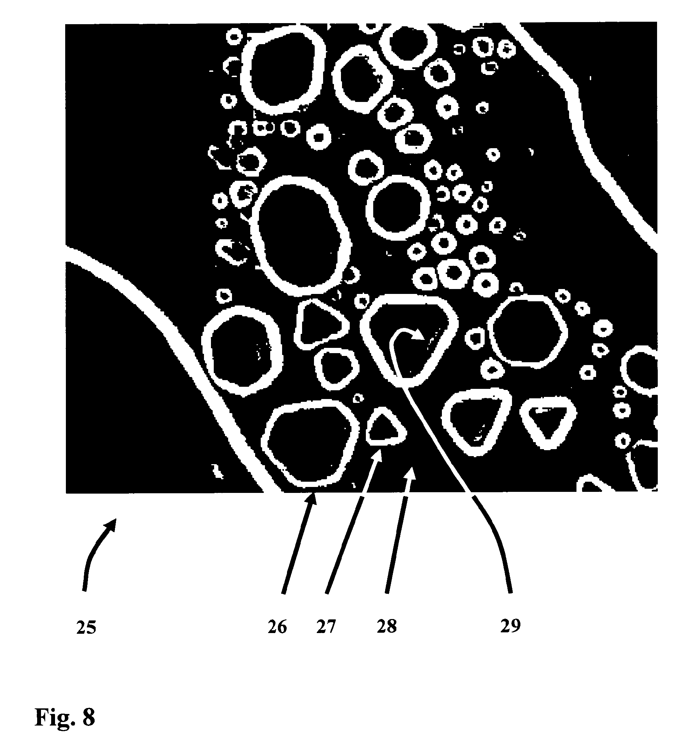

In einem Schritt S6 wird ein erster Schwellwert SW1 festgesetzt, z.B. ein Viertel des maximalen Gradienten im Gradientenbild 22. Gradientenbildpunkte mit einem Helligkeitsbetrag oberhalb des ersten Schwellwertes werden in einem neu zu erstellenden Bild auf logisch 1 gesetzt, wobei Gradientenbildpunkte mit einem Helligkeitsbetrag unterhalb des ersten Schwellwertes SW1 auf logisch 0 gesetzt werden (Schritt S8). Damit wird ein binäres Kantenbild 25 geschaffen, siehe Fig. 8, in welchem die auf logisch 1 gesetzten Bildpunkte Kantenzugbereiche, siehe z.B. Bezugszeichen 26 und 27, bilden, und die auf logisch 0 gesetzten Bildpunkte einen Hintergrund, siehe z.B. Bezugszeichen 28, bilden.

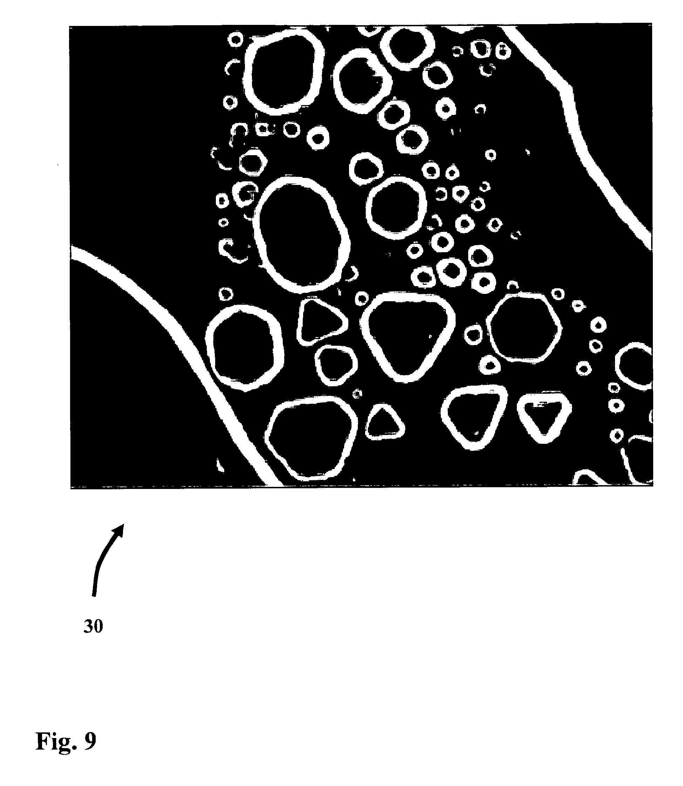

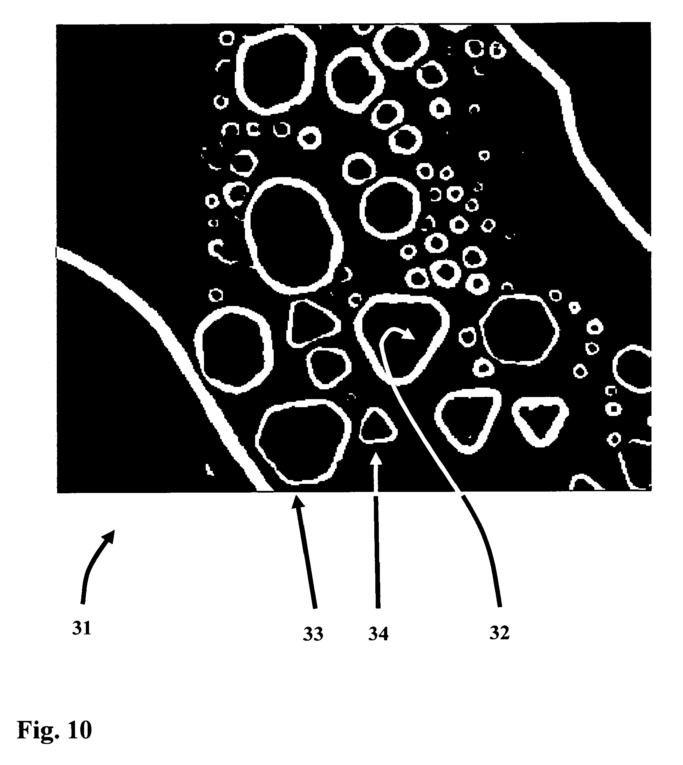

Falls in dem binären Kantenbild 25 noch Signale vorhanden sind, welche als Rauschen, siehe z.B. Bezugszeichen 29 in Fig. 8, gedeutet werden (Schritt S8), kann ein weiteres Glättungsverfahren für das gesamte Bild ("global") durchgeführt werden (Schritt S9). Damit erhält man ein geglättetes binäres Kantenbild 30, siehe Fig. 9. Anschließend wird ein zweiter Schwellwert SW2 festgesetzt, zum Beispiel die Hälfte des maximalen Gradienten im binären Kantenbild 25 (Schritt S 10). Bildpunkte mit einem Helligkeitsbetrag oberhalb des zweiten Schwellwertes werden auf logisch 1 gesetzt, und Bildpunkte mit einem Helligkeitsbetrag unterhalb des zweiten Schwellwertes SW2 werden auf logisch 0 gesetzt. Die auf logisch 1 gesetzten Kantenbildpunkte bilden dann Kantenzugbereiche, während die auf logisch 0 gesetzten Kantenbildpunkte einen Hintergrund bilden. Damit erhält man ein zusätzliches binäres Kantenbild 31 mit Kantenzugbereichen (Schritt S11), siehe Fig. 10. Das in Fig. 8 identifizierte Rauschen, siehe Bezugszeichen 29, ist nun in dem zusätzlichen binären Kantenbild 31 verringert oder nicht mehr vorhanden, siehe Bezugszeichen 32. Es wird darauf hingewiesen, dass die Schritte S9 bis S11 optional sind und entfallen können, wenn bei dem binären Kantenbild 25 gemäß Fig. 8 keine Rauschsignale identifiziert werden. Andererseits ist es selbstverständlich möglich, die Abfrage gemäß Schritt S8 automatisch mit "Ja" zu beantworten, so dass unabhängig von dem Ergebnis nach Schritt S7 stets ein globales Glättungsverfahren durchgeführt wird.

Gemäß der Erfindung wird nun im ursprünglich aufgenommenen Grauwertbild innerhalb von Bereichen, welche den Kantenzugbereichen entsprechen, ein Scharfzeichnungsalgorithmus angewendet (Schritt S 12). Das Prinzip besteht darin, innerhalb dieser Bereiche Grauwert-Verläufe mittels einer Tangens-Hyperbolicus-Funktion anzunähern. Dies kann wie folgt erklärt werden: Beim Übergang vom relativ dunklen Bildhintergrund zu einer Objektkante und von dort zu einem relativ hellen Innenbereich des Objektes nimmt die Helligkeit oder der Grauwert zu. Wird angenommen, dass dieser Übergang unstetig in einer unendlich scharfen Kante vorliegt, kann dies beim Rastern mittels eines Elektronenstrahles jedoch nicht als eine solche unendlich scharfe Kante wiedergegeben werden. Die Ursache liegt darin, dass ein fokussierter Elektronenstrahl eine Intensitätsverteilung besitzt, die ähnlich einer zweidimensionalen Gaußverteilungs-Kurve ist. Wird ein solcher Elektronenstrahl über eine scharfe Kante geführt, entsteht ein Kantenprofil, welches sich allgemein mit einer Tangens-Hyperbolicus-Funktion beschreiben lässt.

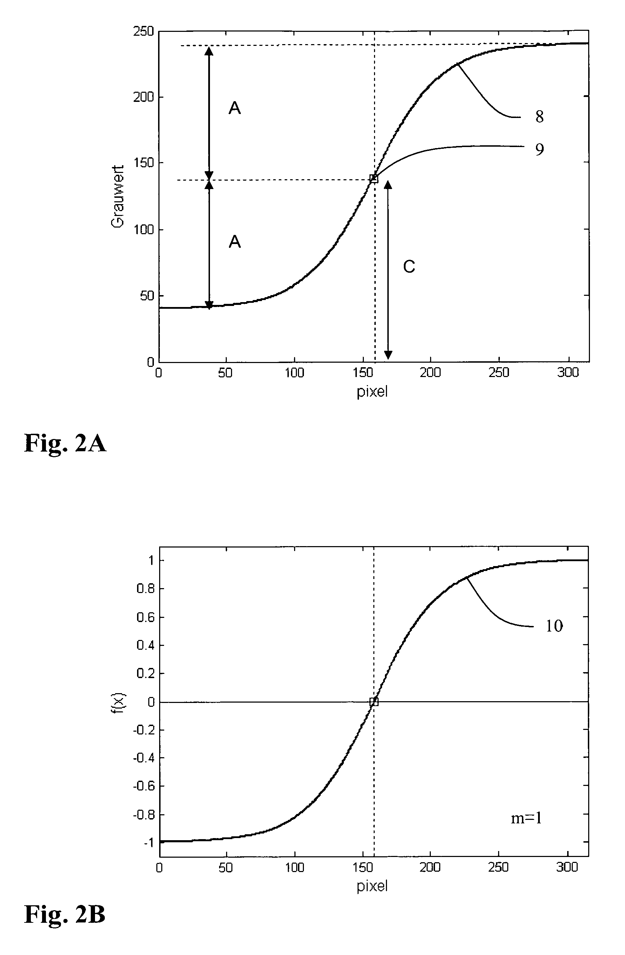

Dies ist schematisch in einem Diagramm in Fig. 2A dargestellt. Eine Kurve 8 zeigt den Grauwertverlauf in Abhängigkeit von Bildpunkten (pixel), wobei die Kurve bei niedriger Pixelzahl einen niedrigen Grauwert und bei hoher Pixelzahl einen hohen Grauwert aufweist. Bei niedriger Pixelzahl, zum Beispiel 0 bis 50, kann von einem dunklen Bildhintergrund ausgegangen werden, während bei hoher Pixelzahl, zum Beispiel ab 280, ein helles Objekt vorliegt. Die Kante zwischen Hintergrund und Objekt nimmt etwa eine Breite von der Pixelzahl 50 bis zur Pixelzahl 280 ein. Mittels eines Scharfzeichnungsalgorithmus kann die Breite dieses Kurvenverlaufes deutlich verringert werden.

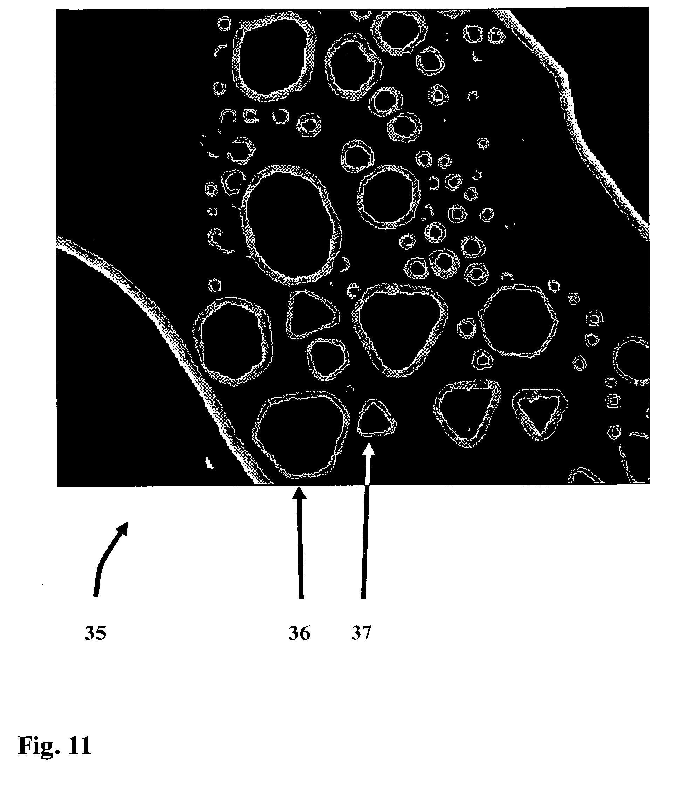

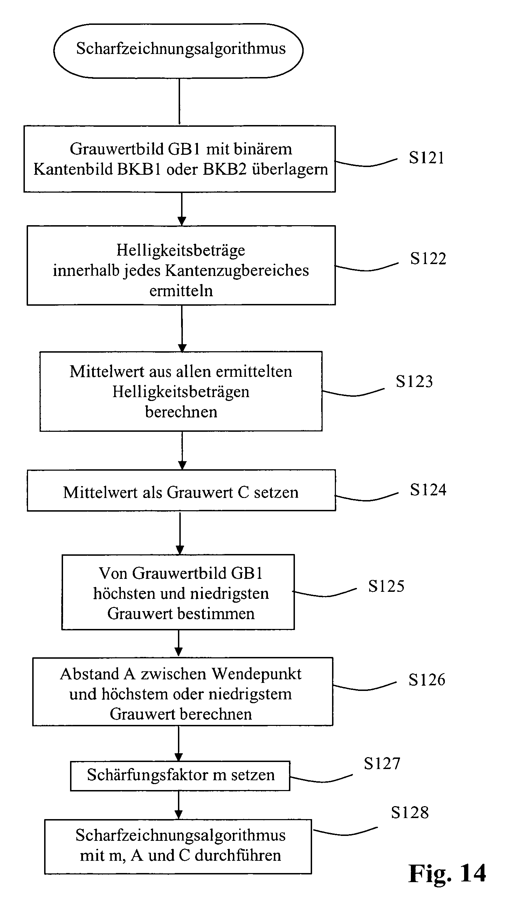

Gemäß einer Ausführungsform der Erfindung ist es dazu zunächst erforderlich, von der Kurve 8 einen Wendepunkt 9 zu bestimmen. In einem Schritt S121, siehe Fig. 14, werden das Grauwertbild 1 und das binäre Kantenbild 25 (oder das zusätzliche binäre Kantenbild 31) überlagert. Fig. 11 zeigt ein solches überlagertes Bild 33, aus dem ersichtlich ist, dass die weiß dargestellten Kantenzugbereiche, siehe zum Beispiel Bezugszeichen 33, 34 in Fig. 10, mit Grauwerten des Grauwertbildes 1 aufgefüllt sind, siehe Bezugszeichen 36, 37. Daraufhin werden in Schritt S122 die Helligkeitsbeträge innerhalb jedes Kantenzugbereiches im gesamten Bild 35 ermittelt. Aus allen so ermittelten Helligkeitsbeträgen wird der Mittelwert berechnet (Schritt S 123), wobei dieser Mittelwert als Grauwert C des Wendepunktes 9 gesetzt wird (Schritt S 124), siehe Fig. 2A. Diese auf das gesamte Bild bezogene Vorgehensweise ist ausreichend, wenn eine im Wesentlichen gleichmäßige Grauwert-Verteilung in dem Grauwertbild 1 vorliegt. Bei Grauwertbildern mit sehr inhomogenen Intensitätsverteilungen ist es notwendig, diese Bestimmung des Grauwertes C auf einzelne Sektoren zu begrenzen und die Berechnung für jeden Sektor einzeln durchzuführen. Der Grauwert C am Wendepunkt 9 könnte jedoch auch auf andere Weise bestimmt werden, zum Beispiel durch "minimaler Grauwert im Bild + (maximaler Grauwert - minimaler Grauwert)/2".

Nach Bestimmung des Wendepunktes 9 wird der Abstand A zwischen dem Wendepunkt 9 und einem höchsten oder niedrigsten Grauwert der Kurve 8 bestimmt. Dazu kann in einem Schritt S 125 vom Grauwertbild GB1 der höchste und niedrigste Grauwert ermittelt und anschließend in einem Schritt S 126 der Abstand A zwischen Wendepunkt 9 und höchstem oder niedrigstem Grauwert berechnet werden. Auch die Berechnung von A kann lokal erfolgen, falls starke Inhomogenitäten im Bild vorhanden sind. Es wird darauf hingewiesen, dass die Methode zur Bestimmung von A nicht auf die oben beschriebene Weise begrenzt ist, sondern auch anders durchgeführt werden kann.

Um die Kurve 8 zu einer Tangens-Hyperbolicus-Funktion zu transformieren, muss der Wendepunkt in ein Koordinatenkreuz so gelegt werden, dass er durch die Abszisse des Koordinatenkreuzes verläuft. Dies geschieht derart, dass von den Grauwerten der Kurve 8 (für das gesamte Grauwertbild durch die Grauwertmatrix "I0" beschrieben) jeweils der Grauwert C des Wendepunktes abgezogen wird. Ferner muss für die Transformation in eine Tangens-Hyperbolicus-Funktion die Amplitude A der Kurve 8 auf den Betrag 1 normiert werden. Die korrigierten Grauwerte I0-C werden dazu durch die Amplitude A dividiert. Das Ergebnis ist eine Kurve 10, siehe Fig. 2B, wobei diese die gleiche Steigung wie die Kurve 8 besitzt; in diesem Fall ist der "Schärfungsfaktor" m=1.

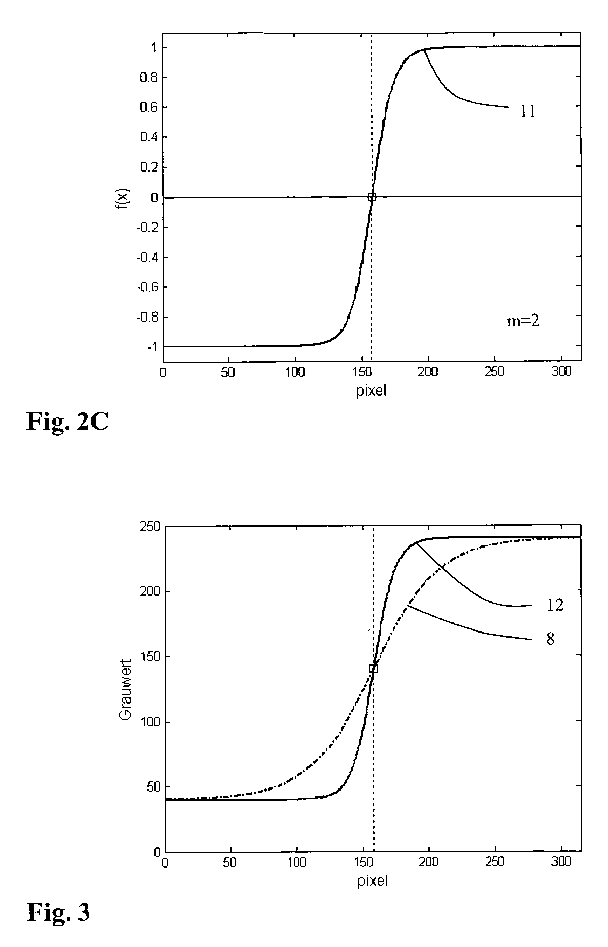

Die Breite der Tangens- Hyperbolicus-Funktion kann verringert werden, indem das Argument der Tangens-Hyperbolicus-Funktion mit einem Faktor m> 1 multipliziert wird, welcher in Schritt S 127 gesetzt werden muss. Fig. 2C zeigt eine mit dem Schärfungsfaktor m=2 "geschärfte" Kurve 11. Der Grauwert-Verlauf "If" einer geschärften Kurve eines Grauwertbildes mit dem ursprünglichen Grauwert I0 kann somit ausgehend von einer Tangens-Hyperbolicus-Funktion mit Amplitude A und Grauwert C des Wendepunktes gemäß folgender Gleichung berechnet werden:

$$ If = A * \tanh\left(m* \text{artanh}\left[\{I0\text{-}C\}/A\right]\right) + C \tag{1} $$

Um sicherzustellen, dass bei der Berechnung des Areatangens Hyperbolicus aufgrund der Divergenz bei -1 und +1 die Werte stets innerhalb dieses Wertebereiches liegen, muss erreicht werden, dass der Betrag des Terms [{I0-C}/A] bei allen Pixeln kleiner als 1 ist.

Eine mit der Gleichung (1) berechnete Kurve 12 ist mit einem Schärfungsfaktor m=2 in Fig. 3 dargestellt. Fig. 3 zeigt zum Vergleich zusätzlich mit strichpunktierter Linie die Kurve 8, welche den ursprünglichen Kurvenverlauf mit einem Schärfungsfaktor m=1 wiedergibt. Dieser Vergleich zeigt, dass bei der Kurve 12 die Breite des Übergangs vom dunklen Hintergrund (Grauwert 50) zum hellen Objekt (Grauwert 230) etwa von den Pixelwerten 100 bis 215 reicht, so dass die Kante zwischen Objekt und Hintergrund nur noch halb so breit ist wie bei der Kurve 8.

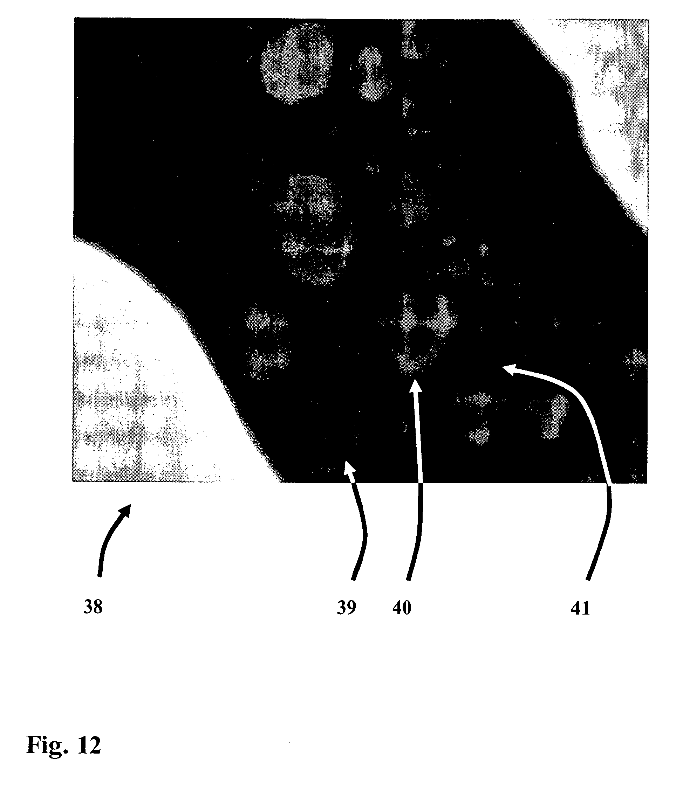

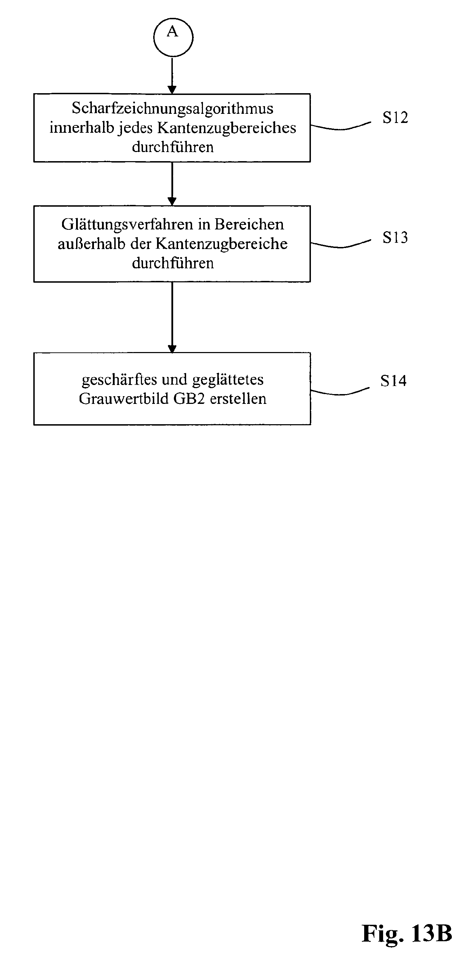

Sind die Kanten derart geschärft worden, wird in Schritt S13, siehe Fig. 13B, ein Glättungsverfahren in Bereichen außerhalb der Kantenzugbereiche durchgeführt. Dies beeinträchtigt die Auflösung des geschärften Bildes nicht, verringert jedoch den Rauschanteil. Mit Schritt S 14 wird dann ein auf den Kanten geschärftes und in Bereichen außerhalb der Kanten geglättetes Bild ausgegeben, siehe Bild 38 in Fig. 12. Die im ursprünglich aufgenommenen Grauwertbild 1 erkennbaren Objekte 2, 3 und 4 entsprechen nach der Schärfung und der Rauschunterdrückung den Objekten 39, 40 und 41.

Das vorstehend beschriebene Verfahren kann durchgeführt werden, nachdem das gesamte Grauwertbild aufgenommen wurde ("offline-Modus"). Es ist jedoch ebenso möglich, das Grauwertbild während seiner Erstellung mit dem beschriebenen Verfahren zu bearbeiten und nur ein geschärftes und geglättetes Bild zu erstellen und anzuzeigen ("online-Modus"). Letzteres ist in dem Fall möglich, wenn ein Kantenfilter zum Einsatz kommt, der nicht die Information des gesamten Bildes zur Kantenfindung benötigt.

## Patentansprüche

1. Verfahren zur Bearbeitung eines digitalen Grauwertbildes, welches die Schritte aufweist:

   a) von dem Grauwertbild ein binäres Kantenbild so erzeugen, dass im Grauwertbild vorhandene Kanten als Kantenzugbereiche ermittelt werden;
   b) im Grauwertbild innerhalb von Bereichen, welche den Kantenzugbereichen entsprechen, einen Scharfzeichnungsalgorithmus anwenden; und
   c) im Grauwertbild innerhalb von Bereichen, welche außerhalb der Kantenzugbereiche liegen, ein Glättungsverfahren durchführen,

   so dass ein zusätzliches, geglättetes und geschärftes Grauwertbild erzeugt wird.

2. Verfahren nach Anspruch 1, wobei mit dem Scharfzeichnungsalgorithmus Grauwerte innerhalb der Bereiche, welche den Kantenzugbereichen entsprechen, mittels einer Tangens Hyperbolicus-Funktion berechnet werden.

3. Verfahren nach Anspruch 2, wobei mit dem Scharfzeichnungsalgorithmus eine Grauwertmatrix mittels folgender Gleichung berechnet wird:

$$If = A * \tanh ( m * abs (\operatorname{artanh} [\{I0\text{-}C\}/A] ) ) + C,$$

mit

   If = Grauwertmatrix des geschärften Grauwertbildes mit Grauwerten innerhalb der Kantenzugbereiche;
   I0 = Grauwertmatrix des unbearbeiteten Grauwertbildes;
   A = Amplitude einer Tangens Hyperbolicus-Funktion, welche den Grauwertverlauf im unbearbeiteten Grauwertbild innerhalb der Bereiche, welche den Kantenzugbereichen entsprechen, angibt;
   C = Grauwert am Wendepunkt der Tangens Hyperbolicus-Funktion, welche den Grauwertverlauf im unbearbeiteten Grauwertbild innerhalb der Bereiche, welche den Kantenzugbereichen entsprechen, angibt; und
   m = Schärfungsfaktor.

4. Verfahren nach einem der Ansprüche 1 bis 3, wobei das binäre Kantenbild mittels eines auf Basis des Grauwertbildes erzeugten Gradientenbildes geschaffen wird, wobei für das Erzeugen des Gradientenbildes vorzugsweise ein Differenzenoperator zum Einsatz kommt, welcher aus der Gruppe ausgewählt ist, welche einen Sabel-Operator, Prewitt-Operator, Laplace-Operator, Kirsch-Operator und Roberts-Operator aufweist.

5. Verfahren nach Anspruch 4, wobei vor dem Erzeugen des Gradientenbildes das Grauwertbild einem Glättungsverfahren, insbesondere mittels eines Medianfilters, unterzogen wird.

6. Verfahren nach Anspruch 4 oder 5, wobei das Gradientenbild durch Verknüpfen eines ersten Richtungs-Gradientenbildes mit einem zweiten Richtungs-Gradientenbild erzeugt wird, wobei das erste Richtungs-Gradientenbild geschaffen wird, indem Gradienten im Grauwertbild in einer ersten Richtung ermittelt werden, und das zweite Richtungs-Gradientenbild geschaffen wird, indem Gradienten im Grauwertbild in einer zur ersten Richtung senkrechten Richtung ermittelt werden.

7.  Verfahren nach einem der Ansprüche 4 bis 6, wobei dem Gradientenbild ein erster Schwellwert zugeordnet wird, und wobei Gradientenbildpunkte mit einem Helligkeitsbetrag oberhalb des ersten Schwellwertes auf logisch 1 gesetzt werden, und unterhalb des ersten Schwellwertes auf logisch 0 gesetzt werden, so dass das binäre Kantenbild geschaffen wird, in welchem die auf logisch 1 gesetzten Gradientenbildpunkte Kantenzugbereiche bilden und die auf logisch 0 gesetzten Gradientenbildpunkte einen Hintergrund bilden.

8.  Verfahren nach Anspruch 7, wobei der erste Schwellwert ein Viertel des maximalen Gradienten im Gradientenbild beträgt.

9.  Verfahren nach einem der Ansprüche 7 oder 8, wobei das binäre Kantenbild einem Glättungsverfahren, insbesondere mittels eines Medianfilters, unterzogen wird und anschließend ein zweiter Schwellwert festgesetzt wird, wobei Bildpunkte mit einem Helligkeitsbetrag oberhalb des zweiten Schwellwertes auf logisch 1 gesetzt werden, und Bildpunkte mit einem Helligkeitsbetrag unterhalb des zweiten Schwellwertes auf logisch 0 gesetzt werden, wobei die auf logisch 1 gesetzten Kantenbildpunkte Kantenzugbereiche bilden und die auf logisch 0 gesetzten Kantenbildpunkte einen Hintergrund bilden, um ein zusätzliches binäres Kantenbild zu erzeugen.

10. Verfahren nach Anspruch 9, wobei der zweite Schwellwert die Hälfte des maximalen Gradienten in dem Kantenbild beträgt, welches einem Glättungsverfahren unterzogen wurde.

11. Computerprogramm, das in einen Speicher eines digitalen Computers ladbar ist und einen Softwarecode zur Durchführung eines Verfahrens nach einem der Ansprüche 1 bis 10 aufweist, wenn das Programm auf dem Computer abläuft.

12. Computerprogramm, das in einen Speicher eines digitalen Computers ladbar ist und einen Softwarecode aufweist, der den Computer bei in den Speicher geladenem Computerprogramm in die Lage versetzt, ein Verfahren nach einem der Ansprüche 1 bis 10 durchzuführen.

13. Computersystem, welches ein Computerprogramm nach Anspruch 11 oder 12 aufweist.

14. Bildaufnahmevorrichtung mit einem Computersystem nach Anspruch 13.

**Fig. 1**

**Fig. 2A**

**Fig. 2B**

**Fig. 2C**

**Fig. 3**

14

Fig. 4

**Fig. 5**

19    20            21

**Fig. 6**

**Fig. 7**

25         26  27  28     29

**Fig. 8**

30

**Fig. 9**

**Fig. 10**

**Fig. 11**

35     36 37

38                  39   40           41

**Fig. 12**

Fig. 13A

A

Scharfzeichnungsalgorithmus
innerhalb jedes Kantenzugbereiches
durchführen — S12

Glättungsverfahren in Bereichen
außerhalb der Kantenzugbereiche
durchführen — S13

geschärftes und geglättetes
Grauwertbild GB2 erstellen — S14

**Fig. 13B**

Scharfzeichnungsalgorithmus

Grauwertbild GB1 mit binärem
Kantenbild BKB1 oder BKB2 überlagern — S121

Helligkeitsbeträge
innerhalb jedes Kantenzugbereiches
ermitteln — S122

Mittelwert aus allen ermittelten
Helligkeitsbeträgen
berechnen — S123

Mittelwert als Grauwert C setzen — S124

Von Grauwertbild GB1
höchsten und niedrigsten
Grauwert bestimmen — S125

Abstand A zwischen Wendepunkt
und höchstem oder niedrigstem
Grauwert berechnen — S126

Schärfungsfaktor m setzen — S127

Scharfzeichnungsalgorithmus
mit m, A und C durchführen — S128

**Fig. 14**

**Fig. 15**